# EUROPEAN PATENT APPLICATION

(11) **EP 4 596 669 A1**
(43) Date of publication of application: **06.08.2025**
(21) Application number: 24810317.8
(22) Date of filing: 17.05.2024
(51) Int. Cl.: C12M 1/36, C12M 1/26, C12M 1/12, C12M 1/00, C12Q 3/00, C12M 1/34

(54) **CONTROL METHOD FOR SAMPLE TESTING APPARATUS, SAMPLE TESTING APPARATUS, AND STORAGE MEDIUM**

(30) Priority: 22.05.2023 CN 202310579473; 22.05.2023 CN 202321246461 U; 22.05.2023 CN 202310580606
(71) Applicant: Sansure Biotech Inc., Changsha, Hunan 410205 (CN)
(72) Inventor: DAI, Lizhong, Changsha, Hunan 410205 (CN); XIE, Yaping, Changsha, Hunan 410205 (CN); LUO, Manhua, Changsha, Hunan 410205 (CN)
(74) Representative: Murgitroyd & Company
(86) International application number: PCT/CN2024/093875
(87) International publication number: WO 2024/240071

(57) **Abstract**

Disclosed are a control method for a sample detection apparatus, a sample detection apparatus, and a storage medium. The sample detection apparatus includes a master control device, a plurality of intermediate control devices and a plurality of driving devices. The control method for the sample detection apparatus includes: generating, by the master control device, a master control instruction based on a sample detection process, and sending the master control instruction to each intermediate control device; parsing, by a target intermediate control device, the master control instruction to generate a combined logic intermediate control instruction and sending the combined logic intermediate control instruction to a target driving device, and performing, by the target driving device, an action of the detection process in response to the combined logic intermediate control instruction.

## Description

### CROSS-REFERENCE TO RELATED APPLICATIONS

The present application claims priority to Chinese Patent Applications No. 202310580606.6, 202310579473.0 and 202321246461.8, filed on May 22, 2023, and the contents of these applications are hereby incorporated by reference in their entireties.

### TECHNICAL FIELD

The present invention relates to the field of apparatus control, and in particular, to a control method for a sample detection apparatus, a sample detection apparatus, and a storage medium.

### BACKGROUND

The Polymerase Chain Reaction (PCR) technique is a molecular biology technique for amplifying specific deoxyribonucleic acid (DNA) fragments. Currently, the PCR technique has been widely applied in the field of biological sample detection such as gene diagnosis and disease diagnosis. When sample detection is performed with a PCR-based sample detection apparatus, operation steps for the sample detection apparatus are complicated, and an operator is required to be far away from the sample detection apparatus. The PCR-based sample detection apparatus generally includes a control apparatus and a plurality of execution apparatuses, where the execution apparatuses are apparatuses such as a robotic arm and an electric gripper. The control apparatus is configured to control the execution apparatuses to perform actions such as tube grasping and tube shaking, so that the operator performs the sample detection in a case that the operator is away from the sample detection apparatus.

However, the sample detection apparatus includes a large number of execution devices, requiring the control apparatus to simultaneously control the plurality of execution devices. The integration of a plurality of control functions into the control apparatus results in instruction complexity and structural complexity in the control apparatus. Since the control apparatus needs to send a large amount of instructions at the same time, the sample detection apparatus is required to maintain a short system-wide response time. The instruction complexity of the control apparatus leads to control latency of the instruction in the control apparatus, which causing the sample detection apparatus to be prone to abnormalities when performing the sample detection, thus leading to failure to obtain a valid sample detection result. In addition, the control apparatus in the sample detection apparatus is usually a control chip integrated with a plurality of control functions, and when one control function of the control chip is abnormal, the whole control apparatus needs to be replaced, making it inconvenient for maintenance. The instruction complexity and structural complexity in the control apparatus elevate the probability of abnormality occurring during operation of the sample detection apparatus, thereby leading to failure to obtain a valid sample detection result.

### SUMMARY

A purpose of embodiments of the present invention is to provide a control method for a sample detection apparatus, a sample detection apparatus, and a storage medium. The control method for the sample detection apparatus is configured to solve a problem that it is failed to obtain a valid sample detection result due to instruction complexity and structural complexity in a control apparatus of a sample detection apparatus.

In order to achieve the foregoing purpose, according to a first aspect, the present application provides a control method for a sample detection apparatus, the sample detection apparatus includes a master control device, a plurality of intermediate control devices, and a plurality of driving devices, and the control method for the sample detection apparatus includes:

generating, by the master control device, a master control instruction based on a sample detection process, and sending the master control instruction to each intermediate control device, where the master control instruction is configured to control a target intermediate control device to perform the detection process, and the target intermediate control device is an intermediate control device capable of parsing the master control instruction;
parsing, by the target intermediate control device, the master control instruction to generate a combined logic intermediate control instruction, and sending the combined logic intermediate control instruction to a target driving device, where the target driving device is a driving device connected to the target intermediate control device; and
performing, by the target driving device, an action of the detection process in response to the combined logic intermediate control instruction.

According to a second aspect, the present application provides a sample detection apparatus, and the sample detection apparatus includes a master control device, a plurality of intermediate control devices, and a plurality of driving devices.

The master control device is configured to generate a master control instruction based on a sample detection process, and send the master control instruction to each intermediate control device, where the master control instruction is configured to control a target intermediate control device to perform the detection process, and the target intermediate control device is an intermediate control device capable of parsing the master control instruction.

The target intermediate control device is configured to parse the master control instruction to generate a combined logic intermediate control instruction, and send the combined logic intermediate control instruction to a target driving device, where the target driving device is a driving device connected to the target intermediate control device.

The target driving device is configured to perform an action of the detection process in response to the combined logic intermediate control instruction.

According to a third aspect, the present application provides a computer-readable storage medium, a computer program is stored on the computer-readable storage medium, and when the computer program is executed by the processor, the foregoing control method for the sample detection apparatus is implemented.

According to above solutions, the master control device controls the intermediate control device and the intermediate control device controls the driving device, which simplifies a master control instruction and a structure of the master control device, reduces a probability of abnormality occurring in the sample detection apparatus, and ensures that the sample detection apparatus obtains a valid sample detection result. Meanwhile, when an abnormality occurs in the sample detection apparatus, only an abnormal device needs to be replaced, without a need to replace the master control device, the intermediate control device and the driving device altogether.

### BRIEF DESCRIPTION OF THE DRAWINGS

The accompanying drawings are used to provide further understanding of the embodiments of the present application and constitute a part of the specification, which are used to explain the embodiments of the present application in conjunction with the following specific embodiments, and do not constitute a limitation on the embodiments of the present application. In the drawings:
FIG. 1 is a flowchart of a control method for a sample detection apparatus according to Embodiment 1 of the present application;
FIG. 2 is a schematic structural diagram of a sample detection apparatus according to Embodiment 1 of the present application;
FIG. 3 is a flowchart of a control method for a sample detection apparatus according to Embodiment 2 of the present application;
FIG. 4 is a schematic structural diagram of a sample detection apparatus according to Embodiment 2 of the present application;
FIG. 5 is a flowchart of a control method for a sample detection apparatus according to Embodiment 3 of the present application;
FIG. 6 is a schematic structural diagram of a sample detection apparatus according to Embodiment 3 of the present application;
FIG. 7 is a schematic diagram of a first structure of a control apparatus for a sample detection apparatus according to Embodiment 4 of the present application;
FIG. 8 is a schematic structural diagram of a lid opening and closing control board according to Embodiment 4 of the present application;
FIG. 9 is a schematic structural diagram of a pipetting control board according to Embodiment 4 of the present application;
FIG. 10 is a schematic structural diagram of a sample conveying control board according to Embodiment 4 of the present application;
FIG. 11 is a schematic structural diagram of an intermediate control board according to Embodiment 4 of the present application; and
FIG. 12 is a schematic diagram of a second structure of a control apparatus for a sample detection apparatus according to Embodiment 4 of the present application.

BRIEF DESCRIPTION OF REFERENCE NUMBERS:

200-sample detection apparatus; 210-master control device, 220-intermediate control device, 230-driving device. 400-sample detection apparatus; 410-master control device, 420-intermediate control device, 430-driving device; 421-lid opening and closing intermediate control device, 422-pipetting intermediate control device, 423-extraction intermediate control device. 600-sample detection apparatus; 610-master control device, 620-intermediate control device, 630-driving device; 621-sample conveying intermediate control device, 622-detection intermediate control device. 1000-control apparatus; 1100-master control device, 1200-intermediate control device, 1300-driving device, 1400-emergency stop control board; 1210-lid opening and closing control board, 1220-pipetting control board, 1230-sample conveying control board, 1240-intermediate control board, 1250-extraction device, 1260-detection device, 1270-communication device; 1311-code scanning device, 1312-first power supply control board, 1313-lid opening and closing motor control board, 1314-first clamping jaw, 1315-second clamping jaw, 1321-second power supply control board, 1322-pipette tip discarding gate motor control board, 1323-pipetting pump, 1324-pipetting motor control board, 1325-plunger removing motor control board, 1331-third clamping jaw, 1332-third power supply control board, 1333-feeding gate motor control board, 1334-cartridge discarding gate motor control board, 1335-conveying motor control board, 1336-sample conveying arm motor control board, 1337-chamber opening motor control board, 1341-fourth power supply control board, 1342-laminar flow purification device, 1343-indicator light control board, 1344-ultraviolet device.

### DETAILED DESCRIPTION OF THE EMBODIMENTS

Technical solutions in the embodiments of the present application are clearly and completely described in the following with reference to the accompanying drawings in the embodiments of the present application. Apparently, the described embodiments are merely some but not all of the embodiments of the present disclosure.

Generally, components of the embodiments of the present application described and illustrated in the accompanying drawings herein may be arranged and designed in various different configurations. Therefore, the following detailed description of the embodiments of the present application provided in the accompanying drawings is not intended to limit the scope of the present application, but merely represents selected embodiments of the present application. All other embodiments obtained by a person skilled in the art based on the embodiments of the present application without creative efforts shall fall within the protection scope of the present application.

In the following, the terms "including", "having" and their homologous words, which may be used in various embodiments of the present application, are merely intended to represent specific features, numbers, steps, operations, elements, components, or a combination of the foregoing, and should not be construed to first exclude the presence or addition of one or more other features, numbers, steps, operations, elements, components, or a combination of the foregoing.

In addition, the terms "first", "second", "third", and the like are only configured to distinguish descriptions, and cannot be understood as indicating or implying relative importance.

Unless otherwise defined, all terms (including technical terms and scientific terms) used herein have the same meanings as commonly understood by one of ordinary skill in the art to which the various embodiments of the present application belong. The terms (such as those defined in commonly used dictionaries) are to be interpreted as having the same meanings as their meanings in the context in the relevant art and shall not be interpreted as having idealized or overly formal meanings, unless clearly defined in various embodiments of the present application.

### Embodiment 1

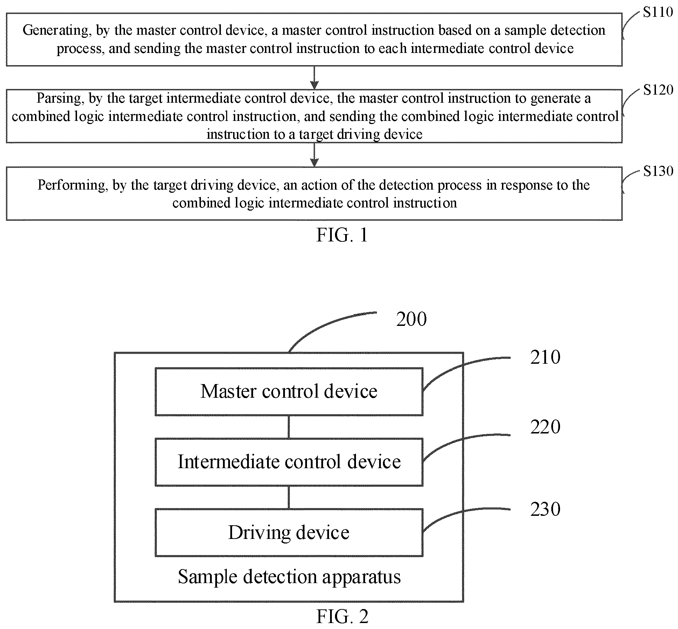

Referring to FIG. 1, FIG. 1 is a flowchart of a control method for a sample detection apparatus according to Embodiment 1 of the present application. The sample detection apparatus includes a master control device, a plurality of intermediate control devices and a plurality of driving devices, and the control method for the sample detection apparatus in FIG. 1 includes:
S110: generating, by the master control device, a master control instruction based on a sample detection process, and sending the master control instruction to each intermediate control device.

Referring to FIG. 2, FIG. 2 is a schematic structural diagram of a sample detection apparatus according to Embodiment 1 of the present application.

The sample detection apparatus 200 includes a master control device 210, a plurality of intermediate control devices 220 and a plurality of driving devices 230. For ease of understanding, only one intermediate control device 220 and one driving device 230 are shown in the figure.

The master control device 210 obtains the sample detection process, and the sample detection process is set according to actual requirements, which is not limited herein. The sample detection process may be directly stored in the master control device 210, and at the same time, the sample detection apparatus may also be connected to an external apparatus, and the external apparatus sends the sample detection process to the master control device 210, so as to remotely control the sample detection apparatus by using the external apparatus.

The master control device 210 sends the master control instruction to each intermediate control device 220, the master control instruction is configured to control a target intermediate control device to perform the detection process, and the target intermediate control device is an intermediate control device 220 capable of parsing the master control instruction. All the intermediate control devices 220 receive the master control instruction, only the target intermediate control device responses to the master control instruction and controls the driving device 230, which ensures that the sample detection apparatus 200 performs detection based on the sample detection process. The master control device 210 controls operation of the intermediate control device 220 to control the driving device 230 through the intermediate control device 220, which simplifies the master control instruction of the master control device 210, and reduces an occurrence probability of abnormal situations such as excessive instruction latency, so that the sample detection apparatus 200 can obtain a valid sample detection result.

In the embodiments of the present application, the master control instruction includes a master control instruction of a lid opening and closing sub-process, a master control instruction of a pipetting sub-process, a master control instruction of an extraction sub-process, a master control instruction of a sample conveying sub-process, and a master control instruction of a detection sub-process.

The master control device determines the sample detection process as a plurality of sub-processes, and generates a master control instruction for each sub-process. For ease of understanding, the sample detection process in the embodiments of the present application is determined as the plurality of sub-processes such as the lid opening and closing sub-process, the pipetting sub-process, the extraction sub-process, the sample conveying sub-process, and the detection sub-process. The master control instruction corresponds to the master control instruction of the lid opening and closing sub-process, the master control instruction of the pipetting sub-process, the master control instruction of the extraction sub-process, the master control instruction of the sample conveying sub-process, and the master control instruction of the detection sub-process.

S120: parsing, by the target intermediate control device, the master control instruction to generate a combined logic intermediate control instruction, and sending the combined logic intermediate control instruction to a target driving device.

In a process of performing sample detection by the sample detection apparatus, the master control instruction is configured to control the intermediate control device, so that the intermediate control device controls the driving device to perform an action of the sample detection process. The combined logic intermediate control instruction is configured to control the driving device to perform the action of the sample detection process. The master control device only needs to control the operation of the intermediate control device through the master control instruction, thereby simplifying the instruction of the master control device. Specifically, after the master control device sends the master control instruction to each intermediate control device, the target intermediate control device responds to the master control instruction. The intermediate control device is an intermediate control device capable of parsing the master control instruction, and determines a combined action that needs to be jointly performed by all the target driving devices. The target driving device is a driving device connected to the target intermediate control device.

The target intermediate control device generates a combined logic intermediate control instruction based on the combined action, and sends the combined logic intermediate control instruction to the target driving device. Specifically, one target intermediate control device is usually connected to at least one target driving device. Taking the pipetting sub-process of the sample detection process as an example, the target intermediate control device needs to control the target driving device to perform a combined action composed of a plurality of actions such as a pipette tip taking action, a liquid aspirating action, a liquid injection action, and a pipette tip removing action. The target intermediate control device controls the target driving device to jointly complete the combined action through the combined logic intermediate control instruction, so as to complete a sub-process of the sample detection process. The master control device sends the master control instruction to the plurality of intermediate control devices, the target intermediate control device responds to the master control instruction, the intermediate control device other than the target intermediate control device does not respond to the master control instruction, and even if there is a delay in a transmission and response of the instruction, the sample detection apparatus can still complete each sub-process of the detection process in sequence, so that the sample detection apparatus can perform detection based on the sample detection process.

S130: performing, by the target driving device, an action of the detection process in response to the combined logic intermediate control instruction.

In the embodiments of the present application, each intermediate control device determines whether to respond and generate the combined logic intermediate control instruction corresponding to the sample detection process. After the target driving device receives the combined logic intermediate control instruction, the target driving device directly responds to the combined logic intermediate control instruction and performs the action of the detection process. The driving device does not need to determine whether to respond to an instruction sent by the master control device, but can directly perform the action, thereby avoiding that the driving device does not correctly respond to the instruction of the master control device, and ensuring that the sample detection apparatus can perform detection based on the sample detection process. Because the master control device, the plurality of intermediate control devices and the plurality of driving devices are not integrated into an integrated device, and when an abnormality occurs in the sample detection apparatus, only an abnormal device needs to be replaced. For example, when an abnormality occurs in one of the intermediate control devices, only an abnormal intermediate control device needs to be replaced, without a need to replace the master control device, the intermediate control devices and the driving devices altogether.

As an example, the control method for the sample detection apparatus further includes:
in a case that the target driving device completes the action, generating, by the target driving device, an action completion signal, and sending the action signal to the target intermediate control device; and
detecting, by the target intermediate control device, whether the master control instruction is completed according to the action completion signal; and
in a case that the master control instruction is not completed, sending, by the target intermediate control device, the combined logic intermediate control instruction to a next target driving device.

For ease of understanding, taking the pipetting sub-process of the sample detection process as an example, the target intermediate control device needs to sequentially send the combined logic intermediate control instruction to each target driving device to control a plurality of target driving devices to jointly perform the combined action of the pipetting sub-process. Specifically, the target intermediate control device sends the combined logic intermediate control instruction to the target driving device, and after the target driving device completes the pipette tip taking action, the target driving device generates the action completion signal, and sends the action signal to the target intermediate control device.

The target intermediate control device detects whether the master control instruction is completed according to the action completion signal. The target intermediate control device determines a combined action of the pipetting sub-process according to the master control instruction of the pipetting sub-process. The target intermediate control device determines, according to the action completion signal, that a completed pipetting sub-process action is the pipette tip taking action and is not a last action of the combined action, and then determines that the intermediate control device does not complete the master control instruction. The target intermediate control device sends the combined logic intermediate control instruction to a next target driving device, and controls the next target driving device to perform the liquid aspirating action.

In a case that a completed pipetting sub-process action is the last action of the combined action, it is determined that the intermediate control device has completed the master control instruction and does not complete the master control instruction. Compared with directly sending an instruction to all the driving devices by the intermediate control device, the intermediate control device sequentially sends an instruction to each driving device according to the action completion signal, and thus even if there is a delay in the transmission and response of the instruction, the sample detection apparatus does not perform an action of a next detection process in advance, thereby ensuring that the sample detection apparatus can perform detection based on the sample detection process.

As an example, the control method for the sample detection apparatus further includes:
acquiring, by the master control device, an instruction completion signal generated by the intermediate control device, and determining, based on the instruction completion signal, whether a sample detection is completed, and
in a case that the sample detection is not completed, performing a step of generating, by the master control device, the master control instruction based on the sample detection process, and sending the master control instruction to the each intermediate control device.

The intermediate control device generates the instruction completion signal after determining that the master control instruction is completed according to the action completion signal sent by the driving device, and sends the instruction completion signal to the master control device. The master control device determines whether the sample detection is completed based on the instruction completion signal, specifically, the master control device determines a completed sub-process based on the instruction completion signal, and determines whether the completed sub-process is a last process of the detection process. In a case that the completed sub-process is the last process of the detection process, it is determined that the sample detection is completed.

In a case that the completed sub-process is not the last process of the detection process, it is determined that the sample detection is not completed. The master control device determines a next sub-process based on the sample detection process. The master control device generates a master control instruction of the next sub-process, and sends the master control instruction of the next sub-process to each intermediate control device. A step of generating, by the master control device, the master control instruction based on the sample detection process, and sending the master control instruction to each intermediate control device is repeatedly performed, until the sample detection apparatus completes all sub-processes of the sample detection process, so that the sample detection apparatus can perform detection based on the sample detection process.

In an example, the intermediate control device includes a function intermediate control device, and the parsing, by the target intermediate control device, the master control instruction to generate the combined logic intermediate control instruction and sending the combined logic intermediate control instruction to the target driving device, includes:
in a case that the target intermediate control device is the function intermediate control device, parsing, by the function intermediate control device, the master control instruction to generate a fifth combined logic intermediate control instruction, and sequentially sending the fifth combined logic intermediate control instruction to each target driving device, where the fifth combined logic intermediate control instruction is configured to control the target driving device to perform a combined action for adjusting a detection environment.

When the target intermediate control device is the function intermediate control device, the function intermediate control device responds to the master control instruction, and the intermediate control device other than the function intermediate control device does not respond to the master control instruction. The function intermediate control device is configured to parse the master control instruction to generate a fifth combined logic intermediate control instruction, so as to control the target driving device to perform the combined action for adjusting the detection environment. The combined action for adjusting the detection environment includes a temperature adjusting action, an air exhaust action, and the like, which is not described herein again.

In an embodiment of the present application, the target driving devices includes an air exhaust device and a temperature control device. The target intermediate control device sequentially sends the fifth combined logic intermediate control instruction to each target driving device. The air exhaust device performs the air exhaust action in response to the combined logic intermediate control instruction; and the temperature control device performs an adjustment action in response to the combined logic intermediate control instruction, so as to adjust a detection environment of the sample detection apparatus, to avoid contamination of the sample.

The present application provides a control method for a sample detection apparatus, in the control method, the intermediate control device controls a driving device, and the driving device directly performs a detection action after receiving an intermediate control device instruction. The driving device no longer needs to determine whether to respond to a received instruction, thereby avoiding that the driving device dose not correctly respond an instruction of the master control device, and ensuring that the sample detection apparatus can perform detection based on a sample detection process.

### Embodiment 2

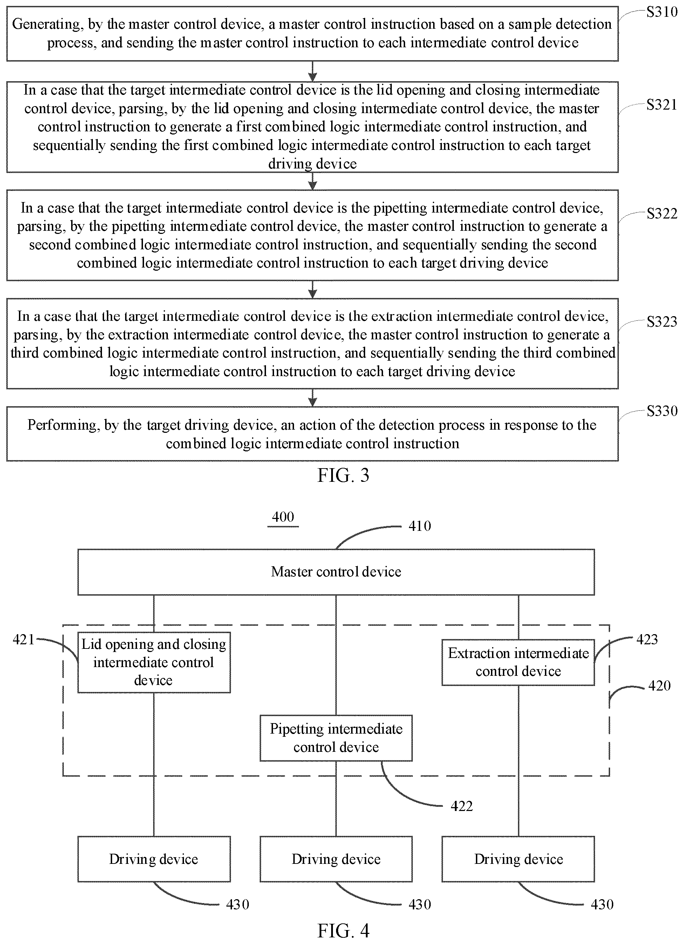

Referring to FIG. 3, FIG. 3 flowchart of a control method for a sample detection apparatus according to Embodiment 2 of the present application. The sample detection apparatus includes a master control device, a plurality of intermediate control devices and a plurality of driving devices, and the control method for the sample detection apparatus in FIG. 3 includes:
S310: generating, by the master control device, a master control instruction based on a sample detection process, and sending the master control instruction to each intermediate control device.

Referring to FIG. 4, FIG. 4 is a schematic structural diagram of a sample detection apparatus according to Embodiment 2 of the present application.

In an embodiment of the present application, an intermediate control device 420 in a sample detection apparatus 400 includes a lid opening and closing intermediate control device 421, a pipetting intermediate control device 422 and an extraction intermediate control device 423. The master control device 410 generates a master control instruction based on a sample detection process, and sends the master control instruction to the lid opening and closing intermediate control device 421, the pipetting intermediate control device 422 and the extraction intermediate control device 423. For ease of understanding, only one driving device 430 connected to the lid opening and closing intermediate control device 421 is shown in the figure, only one driving device 430 connected to the pipetting intermediate control device 422 is shown in the figure, and only one driving device 430 connected to the extraction intermediate control device 423 is shown in the figure.

Generally, when sample detection is performed, it is needed to obtain a purified nucleic acid solution. The purified nucleic acid solution and a detection reagent are injected into a reagent cartridge to obtain a to-be-detected reagent cartridge. For ease of understanding, in an embodiment of the present application, the sample detection apparatus is configured to obtain a to-be-detected reagent cartridge. A step of obtaining a sample detection result based on the to-be-detected reagent cartridge is not described herein in detailed. The sample detection process includes a lid opening sub-process, a reagent aspirating sub-process, a lid closing sub-process, a nucleic acid extraction sub-process and a reagent mixing sub-process.

The master control device 410 generates a master control instruction of the lid opening sub-process, a master control instruction of the reagent aspirating sub-process, a master control instruction of the lid closing sub-process, a master control instruction of the nucleic acid extraction sub-process and a master control instruction of the reagent mixing sub-process, and sequentially sends each master control instruction to the lid opening and closing intermediate control device 421, the pipetting intermediate control device 422 and the extraction intermediate control device 423.

S321: in a case that the target intermediate control device is the lid opening and closing intermediate control device, parsing, by the lid opening and closing intermediate control device, the master control instruction to generate a first combined logic intermediate control instruction, and sequentially sending the first combined logic intermediate control instruction to each target driving device.

After the master control device generates the master control instruction of the lid opening sub-process, and sends the master control instruction of the lid opening sub-process to each intermediate control device, the target intermediate control device responds to the master control instruction, and the pipetting intermediate control device and the extraction intermediate control device do not respond to the master control instruction, that is, the target intermediate control device is the lid opening and closing intermediate control device.

The lid opening and closing intermediate control device is configured to parse the master control instruction to generate the first combined logic intermediate control instruction. The first combined logic intermediate control instruction generated by parsing the master control instruction of the lid opening sub-process is configured to control the target driving device to perform a combined action for opening a lid. The lid opening and closing intermediate control device sequentially sends the first combined logic intermediate control instruction to each target driving device corresponding to the lid opening sub-process, and controls a plurality of target driving devices to jointly perform the combined action for opening a lid. The combined action for opening a lid includes a tube grasping action and a tube lid opening action.

For ease of understanding, taking the target intermediate control device controlling the target driving device to perform the combined action for opening a lid as an example, each target driving device performs one action, that is, one target driving device performs the tube grasping action, and the other target driving device performs the tube lid opening action, so that the two target driving devices jointly perform the combined action for opening a lid.

S322: in a case that the target intermediate control device is the pipetting intermediate control device, parsing, by the pipetting intermediate control device, the master control instruction to generate a second combined logic intermediate control instruction, and sequentially sending the second combined logic intermediate control instruction to each target driving device.

After the lid opening sub-process is completed, the master control device sends the master control instruction of the reagent aspirating sub-process to each intermediate control device in response to an instruction completion signal, and the target intermediate control device responding to the master control instruction is the pipetting intermediate control device. The target intermediate control device is configured to parse the master control instruction to generate the second combined logic intermediate control instruction. The second combined logic intermediate control instruction generated by parsing the master control instruction of the reagent aspirating sub-process is configured to control the target driving device to perform a combined action for aspirating a reagent.

The target intermediate control device sequentially sends the second combined logic intermediate control instruction to each target driving device corresponding to the reagent aspirating sub-process, and controls a plurality of target driving devices to jointly perform the combined action for aspirating the reagent. The combined action for aspirating the reagent includes a pipette tip taking action and an action of aspirating a detection sample and injecting the detection sample into a deep well plate.

After the reagent aspirating sub-process is completed, the master control device sends the master control instruction of the lid closing sub-process to each intermediate control device in response to an instruction completion signal, and the target intermediate control device responding to the master control instruction is the lid opening and closing intermediate control device. The target intermediate control device is configured to parse the master control instruction to generate a first combined logic intermediate control instruction. The first combined logic intermediate control instruction generated by parsing the master control instruction of the lid closing sub-process is configured to control the target driving device to perform a combined action for closing a lid.

The target intermediate control device sequentially sends the first combined logic intermediate control instruction to each target driving device corresponding to the lid closing sub-process, and controls a plurality of target driving devices to jointly perform the combined action for closing a lid. The combined action for closing a lid includes a tube lid closing action and an action for placing the tube into a rack.

S323: in a case that the target intermediate control device is the extraction intermediate control device, parsing, by the extraction intermediate control device, the master control instruction to generate a third combined logic intermediate control instruction, and sequentially sending the third combined logic intermediate control instruction to each target driving device.

After a required number of samples are collected, the master control device sends the master control instruction of the nucleic acid extraction sub-process to each intermediate control device in response to an instruction completion signal, and the target intermediate control device responding to the master control instruction is the pipetting intermediate control device. The target intermediate control device is configured to parse the master control instruction to generate the third combined logic intermediate control instruction. The third combined logic intermediate control instruction generated by parsing the master control instruction of the nucleic acid extraction sub-process is configured to control the target driving device to perform a combined action for extracting nucleic acid.

The target intermediate control device sequentially sends the third combined logic intermediate control instruction to each target driving device corresponding to the nucleic acid extraction sub-process, and controls a plurality of target driving devices to jointly perform the combined action for extracting the nucleic acid. The combined action for extracting the nucleic acid includes a magnetic rod sleeve taking and removing action, a cell lysis action, a nucleic acid adsorption and transferring action, and a nucleic acid washing and purifying action.

After the nucleic acid extraction sub-process is completed, the master control device sends the master control instruction of the reagent mixing sub-process to each intermediate control device in response to an instruction completion signal, and the target intermediate control device responding to the master control instruction is the lid opening and closing intermediate control device. The target intermediate control device is configured to parse the master control instruction to generate a second combined logic intermediate control instruction. The second combined logic intermediate control instruction generated by parsing the master control instruction of the reagent mixing sub-process is configured to control the target driving device to perform a combined action for mixing a reagent.

The target intermediate control device sequentially sends the second combined logic intermediate control instruction to each target driving device corresponding to the reagent mixing sub-process, and controls a plurality of target driving devices to jointly perform the combined action for mixing the reagent. The combined action for mixing the reagent includes a pipette tip removing action, a plunger removing action, an action of injecting a purified nucleic acid solution and a detection reagent into a reagent cartridge, a reagent cartridge mixing action and a plunger pressing action.

S330: performing, by the target driving device, an action of the detection process in response to the combined logic intermediate control instruction.

The target driving device directly responds to the combined logic intermediate control instruction and performs one action of the detection process. The sample detection process is divided into a plurality of actions, each driving device performs one action to obtain a combined action of the detection process, and then a to-be-detected reagent cartridge is obtained.

### Embodiment 3

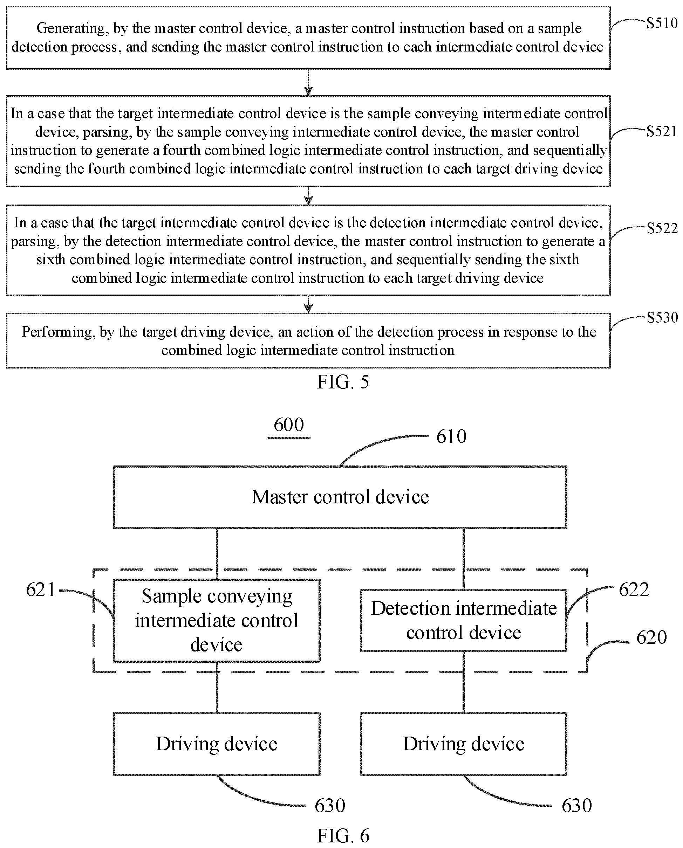

Referring to FIG. 5, FIG. 5 is a flowchart of a control method for a sample detection apparatus according to Embodiment 3 of the present application. The sample detection apparatus includes a master control device, a plurality of intermediate control devices and a plurality of driving devices, and the control method for the sample detection apparatus in FIG. 5 includes:
S510: generating, by the master control device, a master control instruction based on a sample detection process, and sending the master control instruction to each intermediate control device.

Referring to FIG. 6, FIG. 6 is a schematic structural diagram of a sample detection apparatus according to Embodiment 3 of the present application.

In an embodiment of the present application, an intermediate control device 620 in a sample detection apparatus 600 includes a sample conveying intermediate control device 621 and a detection intermediate control device 622. The master control device 610 generates a master control instruction based on the sample detection process, and sends the master control instruction to the sample conveying intermediate control device 621 and the detection intermediate control device 622. For ease of understanding, only one driving device 630 connected to the sample conveying intermediate control device 621 is shown in the figure, and only one driving device 630 connected to the detection intermediate control device 622 is shown in the figure.

Generally, when sample detection is performed, it is needed to perform detection on a reagent cartridge to obtain a sample detection result after a to-be-detected reagent cartridge is obtained. For ease of understanding, in an embodiment of the present application, the sample detection apparatus is configured to obtain the sample detection result. The sample detection process includes a sample conveying sub-process and a detection sub-process. The master control device 610 generates a master control instruction of the sample conveying sub-process and a master control instruction of the detection sub-process based on the sample detection process, and sends each master control instruction to the sample conveying intermediate control device 621 and the detection intermediate control device 622 in sequence.

S521: in a case that the target intermediate control device is the sample conveying intermediate control device, parsing, by the sample conveying intermediate control device, the master control instruction to generate a fourth combined logic intermediate control instruction, and sequentially sending the fourth combined logic intermediate control instruction to each target driving device.

After the to-be-detected reagent cartridge is obtained, the master control device sends the master control instruction of the sample conveying sub-process to each intermediate control device in response to an instruction completion signal, and the target intermediate control device responding to the master control instruction is the sample conveying intermediate control device. The target intermediate control device is configured to parse the master control instruction to generate a fourth combined logic intermediate control instruction. The fourth combined logic intermediate control instruction generated by parsing the master control instruction of the sample conveying sub-process is configured to control the target driving device to perform a combined action for conveying a sample.

The target intermediate control device sequentially sends the fourth combined logic intermediate control instruction to each target driving device corresponding to the sample conveying sub-process, and controls a plurality of target driving devices to jointly perform the combined action for conveying the sample. The combined action for conveying the sample includes an action of opening a chamber door at a detection position, an action of transferring a reagent cartridge to the detection position, an action of closing the chamber door at the detection position, an action of opening a detection cartridge, an action of inserting the reagent cartridge into a detection slot and an action of closing the detection cartridge.

S522, in a case that the target intermediate control device is the detection intermediate control device, parsing, by the detection intermediate control device, the master control instruction to generate a sixth combined logic intermediate control instruction, and sequentially sending the sixth combined logic intermediate control instruction to each target driving device.

After completing the sample conveying sub-process, the master control device sends the master control instruction of the detection sub-process to each intermediate control device in response to an instruction completion signal, and the target intermediate control device responding to the master control instruction is the detection intermediate control device. The target intermediate control device is configured to parse the master control instruction to generate the sixth combined logic intermediate control instruction. The sixth combined logic intermediate control instruction generated by parsing the master control instruction of the detection sub-process is configured to control the target driving device to perform a combined action for obtaining sample detection data.

The target intermediate control device sequentially sends the sixth combined logic intermediate control instruction to each target driving device corresponding to the detection sub-process, and controls a plurality of target driving devices to jointly perform the combined action for obtaining the sample detection data. The combined action for obtaining the sample detection data includes a nucleic acid amplification action and an action for extracting sample detection data. It should be understood that the first combined logic intermediate control instruction, the second combined logic intermediate control instruction, the third combined logic intermediate control instruction, the fourth combined logic intermediate control instruction, the fifth combined logic intermediate control instruction, and the sixth combined logic intermediate control instruction in the embodiments of the present application are only used to distinguish descriptions, and cannot be understood as indicating or implying relative importance.

In an example, the control method for the sample detection apparatus further includes:
obtaining, by the master control device, the sample detection data obtained by the detection intermediate control device, and generating a sample detection result based on the sample detection data.

The detection intermediate control device sends an obtained sample detection data to the master control device, and the master control device generates the sample detection result based on the sample detection data. It should be understood that the intermediate control device may be implemented by using a control board or the like, and details are not described herein again. In a case that the driving device may directly respond to an instruction of the master control device, the driving device may be regarded as a device including the intermediate control device. For ease of understanding, in an embodiment of the present application, the sample detection apparatus includes a PCR sample detection apparatus.

S530: performing, by the target driving device, an action of the detection process in response to the combined logic intermediate control instruction.

The target driving device directly responds to the combined logic intermediate control instruction and performs one action of the detection process. The sample detection process is divided into a plurality of actions, and each driving device performs one action to obtain a combined action of the detection process, so as to obtain the sample detection result.

### Embodiment 4

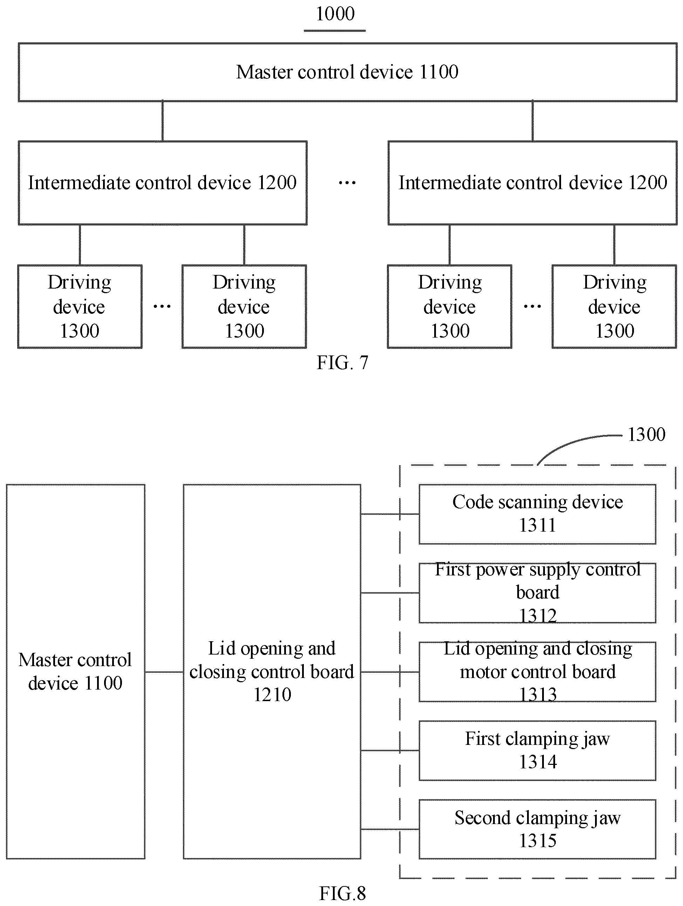

Referring to FIG. 7, FIG. 7 is a schematic diagram of a first structure of a control apparatus for a sample detection apparatus according to Embodiment 4 of the present application.

The control apparatus 1000 is configured to control a sample detection apparatus, and the control apparatus 1000 includes: a master control device 1100, a plurality of intermediate control devices 1200, and a plurality of driving devices 1300.

One end of each intermediate control device 1200 is connected to the master control device 1100, and the other end of each intermediate control device 1200 is connected to at least one driving device 1300.

The master control device 1100 is configured to generate a master control instruction based on a sample detection process, and send the master control instruction to each intermediate control device 1200. The master control instruction is configured to control the intermediate control device 1200 to perform a detection process.

The intermediate control device 1200 is configured to parse the master control instruction to generate a combined logic intermediate control instruction, and send the combined logic intermediate control instruction to a driving device 1300.

The driving device 1300 is configured to perform an action of the detection process in response to the combined logic intermediate control instruction.

One end of each intermediate control device 1200 is connected to the master control device 1100, and the other end of the intermediate control device 1200 is connected to at least one driving device 1300. A connection manner between the master control device 1100 and the intermediate control device 1200 is set according to actual requirements, and may be a Recommended Standard (RS) 232 bus connection, or may be a CAN bus connection, which is not limited herein. A connection manner between the driving device 1300 and the intermediate control device 1200 is also set according to actual requirements, which is not limited herein. The number of the intermediate control devices 1200 and the number of the driving devices 1300 are set according to actual requirements, and the number of the driving device 1300 connected to each intermediate control device 1200 is also set according to actual requirements, which are not limited herein. For ease of understanding, only two intermediate control devices 1200 and four driving devices 1300 are shown in the figure, and each intermediate control device 1200 is connected to two driving devices 1300.

By the master control device 1100, the sample detection process is determined as a plurality of sub-processes, and a master control instruction is generated for each sub-process. For ease of understanding, the sample detection process in the embodiments of the present application is composed of a plurality of sub-processes such as a lid opening and closing sub-process, a pipetting sub-process, an extraction sub-process, a sample conveying sub-process, and a detection sub-process. The control apparatus 1000 includes a plurality of intermediate control devices 1200, and each intermediate control device 1200 is configured to control a driving device 1300 to perform an action of at least one sub-process. In a case of performing the lid opening and closing sub-process, the intermediate control device 1200 responding to the master control instruction for the lid opening and closing sub-process is a target intermediate control device; in a case of performing the extraction sub-process, the intermediate control device 1200 responding to the master control instruction for the extraction sub-process is a target intermediate control device, and a target intermediate control device of other sub-processes is not described herein again. The master control device 1100 sends the master control instruction to each intermediate control device 1200, and the target intermediate control device parses the master control instruction to determine a sub-process of the detection process in response to the master control instruction. The intermediate control device 1200 determines the sub-process of the detection process as a plurality of actions, and generates a combined logic intermediate control instruction according to an execution sequence of the plurality of actions of the sub-process. The master control device 1100 controls operation of the intermediate control device 1200, so as to control the driving device 1300 through the intermediate control device 1200, which simplifies the master control instruction of the master control device 1100, and reduces an occurrence probability of abnormal situations such as an excessive instruction latency, so that the sample detection apparatus can obtain a valid sample detection result.

The target intermediate control device sequentially sends each combined logic intermediate control instruction to each target driving device 1300 based on the execution sequence of the plurality of actions. The target driving device 1300 is a target driving device 1300 connected to the target intermediate control device. Each driving device 1300 is controlled to perform one action of the detection process by using the combined logic intermediate control instruction, so as to jointly complete all actions of the detection process through the plurality of driving devices 1300. When the driving device 1300 does not receive an instruction, the driving device 1300 does not perform an action of the detecting process. When the driving device 1300 receives the instruction, the driving device 1300 directly performs an action of the detection process. The driving device 1300 no longer needs to determine whether to respond to a received instruction, thereby avoiding that the driving device 1300 does not correctly respond to an instruction of the master control device 1100, and ensuring that the sample detection apparatus can perform detection based on the sample detection process. Because the master control device 1100, the plurality of intermediate control devices 1200 and the plurality of driving devices 1300 are not integrated into an integrated device, and when an abnormality occurs in the sample detection apparatus, only an abnormal device needs to be replaced. For example, when an abnormality occurs in one of the intermediate control devices, only an abnormal intermediate control device 1200 needs to be replaced, without a need to replace the master control device 1100, the intermediate control devices 1200 and the driving devices 1300 altogether.

Referring to FIG. 8, FIG. 8 is a schematic structural diagram of a lid opening and closing control board according to Embodiment 4 of the present application.

In an embodiment of the present application, an intermediate control device 1200 includes a lid opening and closing control board 1210, and a driving device 1300 includes a code scanning device 1311, a first power supply control board 1312, a plurality of lid opening and closing motor control boards 1313, a plurality of first clamping jaws 1314, and a plurality of second clamping jaws 1315.

The lid opening and closing control board 1210 is respectively connected to the code scanning device 1311, the first power supply control board 1312, a lid opening and closing motor control board 1313, a first clamping jaw 1314 and a second clamping jaw 1315.

The code scanning device 1311 is configured to obtain barcode information of a sample tube.

The first power supply control board 1312 is configured to control power supply states of the lid opening and closing motor control board 1313, the first clamping jaw 1314, and the second clamping jaw 1315.

The lid opening and closing motor control board 1313 is configured to control a motor running state of a lid opening and closing robotic arm.

The first clamping jaw 1314 is configured to clamp a cap of a reagent cartridge.

The second clamping jaw 1315 is configured to clamp a base of the reagent cartridge.

A sample detection process is determined as a plurality of sub-processes. In a case that a sample detection apparatus performs a lid opening and closing sub-process, the lid opening and closing control board 1210 is configured to respond to a master control instruction of the master control device 1100, and the intermediate control device 1200 other than the lid opening and closing control board 1210 does not respond to the master control instruction of the master control device 1100. The lid opening and closing control board 1210 parses the master control instruction to generate a combined logic intermediate control instruction. Based on an action sequence of the lid opening and closing sub-process, the lid opening and closing control board 1210 sequentially sends the combined logic intermediate control instruction to the plurality of driving devices 1300. The action sequence of the lid opening and closing sub-process is set according to actual requirements, and details are not described herein again. It should be understood that, in a case that the intermediate control device 1200 is the lid opening and closing intermediate control device, the lid opening and closing intermediate control device includes a lid opening and closing control board 1210 and other devices, and the other devices are set according to an actual lid opening and closing sub-process, which are not limited herein.

Generally, the sample detection apparatus needs to detect a plurality of samples at a same time, and the code scanning device 1311 obtains the barcode information of a sample tube to distinguish a plurality of samples in a case of receiving the combined logic intermediate control instruction. The first power supply control board 1312 controls the power supply states of the lid opening and closing motor control board 1313, the first clamping jaw 1314, and the second clamping jaw 1315 in a case of receiving the combined logic intermediate control instruction. The lid opening and closing motor control board 1313 controls a motor working state of the lid opening and closing robotic arm in a case of receiving the combined logic intermediate control instruction. The first clamping jaw 1314 clamps the cap of the reagent cartridge in a case of receiving the combined logic intermediate control instruction. The second clamping jaw 1315 clamps the base of the reagent cartridge in a case of receiving the combined logic intermediate control instruction. Parameters such as clamping positions, clamping force values, operation speeds and rotation angles of the first clamping jaw 1314 and the second clamping jaw 1315 are controlled by the lid opening and closing control board 1210, so that a plurality of driving devices perform actions of the lid opening and closing sub-process such as a tube clamping action, a tube lid opening action and a tube lid closing action, and then the sample detection apparatus is controlled to perform the sample detection process.

The number of the lid opening and closing motor control board 1313, the number of the first clamping jaws 1314 and the number of the second clamping jaws 1315 are set according to actual requirements, which are not limited herein. For ease of understanding, only one lid opening and closing motor control board 1313, one first clamping jaw 1314 and one second clamping jaw 1315 are shown in the figure, and a connection relationship between the first power supply control board 1312 and the lid opening and closing motor control board 1313, the first clamping jaw 1314 and the second clamping jaw 1315 is not shown.

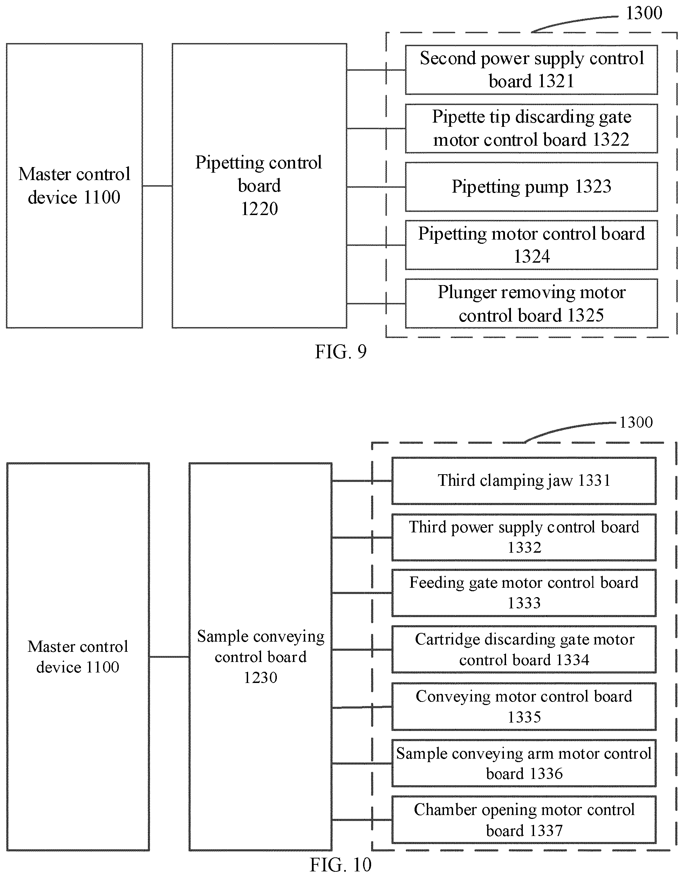

Referring to FIG. 9, FIG. 9 is a schematic structural diagram of a pipetting control board according to the Embodiment 4 of the present application.

In an embodiment of the present application, an intermediate control device 1200 includes a pipetting control board 1220, and a driving device 1300 includes a second power supply control board 1321, a pipette tip discarding gate motor control board 1322, a plurality of pipetting pumps 1323, a plurality of pipetting motor control boards 1324, and a plurality of plunger removing motor control boards 1325.

The pipetting control board 1220 is connected to the second power supply control board 1321, the pipette tip discarding gate motor control board 1322, the pipetting pump 1323, the pipetting motor control board 1324, and the plunger removing motor control board 1325, respectively.

The second power supply control board 1321 is configured to control power supply states of the pipette tip discarding gate motor control board 1322, the pipetting pump 1323, the pipetting motor control board 1324, and the plunger removing motor control board 1325.

The pipette tip discarding gate motor control board 1322 is configured to control a motor running state of a pipette tip discarding device.

The pipetting pump 1323 is configured to aspirate or discharge a liquid.

The pipetting motor control board 1324 is configured to control a motor running state of a pipetting robotic arm.

The plunger removing motor control board 1325 is configured to control a motor running state of a plunger removing device.

A sample detection process is determined as a plurality of sub-processes. In a case that a sample detection apparatus performs a pipetting sub-process, the pipetting control board 1220 is configured to respond to a master control instruction of the master control device 1100, and the intermediate control device 1200 other than the pipetting control board 1220 does not respond to the master control instruction of the master control device 1100. The pipetting control board 1220 parses the master control instruction to generate a combined logic intermediate control instruction. Based on an action sequence of the pipetting sub-process, the pipetting control board 1220 sequentially sends the combined logic intermediate control instruction to the plurality of driving devices 1300. The action sequence of the pipetting sub-processes is set according to actual requirements, and details are not described herein again. It should be understood that, in a case that the intermediate control device 1200 is a pipetting intermediate control device, the pipetting intermediate control device includes a pipetting control board 1220 and other devices, and the other devices are set according to an actual pipetting sub-process, which are not limited herein.

The second power supply control board 1321 controls the power supply states of the pipette tip discarding gate motor control board 1322, the pipetting pump 1323, the pipetting motor control board 1324, and the plunger removing motor control board 1325 in a case of receiving the combined logic intermediate control instruction. The pipette tip discarding gate motor control board 1322 controls a motor working state of the pipette tip discarding device in a case of receiving the combined logic intermediate control instruction. The pipetting pump 1323 aspirates or discharges a liquid in a case of receiving the combined logic intermediate control instruction. The pipetting motor control board 1324 controls a motor working state of the pipetting robotic arm in a case of receiving the combined logic intermediate control instruction. The plunger removing motor control board 1325 controls a motor working state of the plunger removing device in a case of receiving the combined logic intermediate control instruction. Actions of the pipetting sub-process such as a reagent aspirating action, a liquid surface detection action, a reagent discharge action, a pipette tip taking action and a pipette tip removing action are performed by means of the plurality of driving devices, so that the sample detection apparatus is controlled to perform the sample detection process.

The number of the pipetting pumps 1323, The number of the pipetting motor control boards 1324 and the number of the plunger removing motor control boards 1325 are set according to actual requirements, which are not limited herein. For ease of understanding, only one pipetting pump 1323, one pipetting motor control board 1324 and one plunger removing motor control board 1325 are shown in the figure, and a connection relationship between the second power supply control board 1321 and the pipette tip discarding gate motor control board 1322, the pipetting pump 1323, the pipetting motor control board 1324 and the plunger removing motor control board 1325 is not shown.

Referring to FIG. 10, FIG. 10 is a schematic structural diagram of a sample conveying control board according to the Embodiment 4 of the present application.

In an embodiment of the present application, an intermediate control device 1200 includes a sample conveying control board 1230, and a driving device 1300 includes a third clamping jaw 1331, a third power supply control board 1332, a feeding gate motor control board 1333, a cartridge discarding gate motor control board 1334, a plurality of conveying motor control boards 1335, a plurality of sample conveying arm motor control boards 1336, and a plurality of chamber opening motor control boards 1337.

The sample conveying control board 1230 is respectively connected to the third clamping jaw 1331, the third power supply control board 1332, the feeding gate motor control board 1333, the cartridge discarding gate motor control board 1334, the conveying motor control board 1335, the sample conveying arm motor control board 1336 and the chamber opening motor control board 1337.

The third clamping jaw 1331 is configured to clamp a reagent cartridge.

The third power supply control board 1332 is configured to control a power supply state of the third clamping jaw 1331.

The feeding gate motor control board 1333 is configured to control a motor running state of a feeding device.

The cartridge discarding gate motor control board 1334 is configured to control a motor running state of a cartridge discarding device.

The conveying motor control board 1335 is configured to control a motor running state of a conveying device.

The sample conveying arm motor control board 1336 is configured to control a motor running state of a sample conveying robotic arm.

The chamber opening motor control board 1337 is configured to control a motor running state of a chamber opening device. A sample detection process is determined as a plurality of sub-processes. In a case that a sample detection apparatus performs a sample conveying sub-process, the sample conveying control board 1230 is configured to respond to a master control instruction of a master control device 1100, and the intermediate control device 1200 other than the sample conveying control board 1230 does not respond to the master control instruction of the master control device 1100. The sample conveying control board 1230 parses the master control instruction to generate a combined logic intermediate control instruction. The sample conveying control board 1230 sequentially sends the combined logic intermediate control instruction to a plurality of driving devices 1300 based on an action sequence of the sample conveying sub-processes. The action sequence of the sample conveying sub-processes is set according to actual requirements, and details are not described herein again. It should be understood that, in a case that the intermediate control device 1200 is the sample conveying intermediate control device, the sample conveying intermediate control device includes the sample conveying control board 1230 and other devices, and the other devices are set according to an actual sample conveying sub-process, which are not limited herein.

The third clamping jaw 1331 clamps the reagent cartridge in a case of receiving the combined logic intermediate control instruction. The third power supply control board 1332 controls the power supply state of the third clamping jaw 1331 in a case of receiving the combined logic intermediate control instruction. The feeding gate motor control board 1333 controls a motor working state of the feeding device in a case of receiving the combined logic intermediate control instruction. The cartridge discarding gate motor control board 1334 controls a motor working state of the cartridge discarding device in a case of receiving the combined logic intermediate control instruction. The conveying motor control board 1335 controls a motor working state of the conveying device in a case of receiving the combined logic intermediate control instruction. The sample conveying arm motor control board 1336 controls a motor working state of the sample conveying robotic arm in a case of receiving the combined logic intermediate control instruction. The chamber opening motor control board 1337 controls a motor working state of the chamber opening device in a case of receiving the combined logic intermediate control instruction. Actions of the sample conveying sub-process such as an action of opening a chamber door at a detection position, an action of transferring a reagent cartridge to the detection position, an action of closing the chamber door at the detection position, an action of opening a detection cartridge, an action of inserting the reagent cartridge into a detection slot and an action of closing the detection cartridge are performed by means of the plurality of driving devices, so that the sample detection apparatus is controlled to perform the sample detection process.

The number of the plurality of conveying motor control boards 1335, the number of the sample conveying arm motor control boards 1336, and the number of the chamber opening motor control boards 1337 are set according to actual requirements, which are not limited herein. For ease of understanding, only one conveying motor control board 1335, one sample conveying arm motor control board 1336 and one chamber opening motor control board 1337 are shown in the figure, and a connection relationship between the third power supply control board 1332 and the third clamping jaw 1331 is not shown.

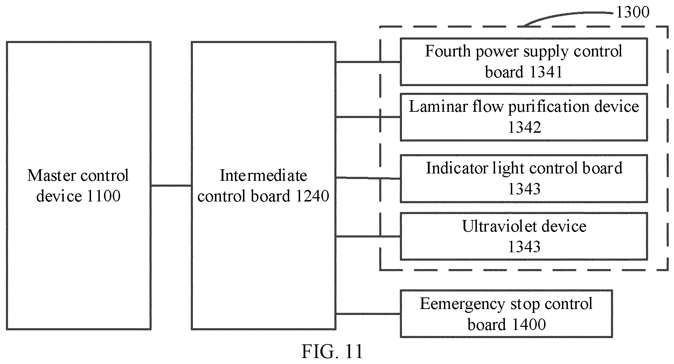

Referring to FIG. 11, FIG. 11 is a schematic structural diagram of an intermediate control board according to the Embodiment 4 of the present application.

In an embodiment of the present application, an intermediate control device 1200 includes an intermediate control board 1240, and a driving device 1300 includes a fourth power supply control board 1341, a laminar flow purification device 1342, a plurality of indicator light control boards 1343, and a plurality of ultraviolet devices 1344.

The intermediate control board 1240 is connected to the fourth power supply control board 1341, the laminar flow purification device 1342, the indicator light control board 1343 and the ultraviolet device 1344.

The laminar flow purification device 1342 is configured to purify pollutants in a sample detection apparatus.

The ultraviolet device 343 is configured to disinfect the sample detection apparatus.

The indicator light control board 1343 is configured to control an indication state of an indicator light.

The fourth power supply control board 1341 is configured to control power supply states of the indicator light, the laminar flow purification device 1342, and the ultraviolet device 1344.

The master control device 1100 is further configured to determine a working state of the sample detection apparatus. Specifically, the master control device 1100 generates a master control instruction in a case of receiving a working state determination request. The sample conveying control board 1230 is configured to respond to the master control instruction of the master control device 1100, and the intermediate control device 1200 other than the sample conveying control board 1230 does not respond to the master control instruction of the master control device 1100. The fourth power supply control board 1341 controls the power supply states of the indicator light, the laminar flow purification device 1342, and the ultraviolet device 1344. The intermediate control board 1240 sends an instruction to the indicator light control board 1343 and the fourth power supply control board 1341 according to a working state of the sample detection apparatus. Specifically, the fourth power supply control board 1341 is configured to control the power supply state of the indicator light. The indicator light control board 1343 is configured to control the indicator light to be adjusted to an indication state such as intermittent flashing and continuous illumination. It should be understood that the sample detection apparatus may be configured to be in different working states according to actual requirements, and the indicator light feeds back a working state of the sample detection apparatus through different indication states, which is not repeated herein in detail. The laminar flow purification device 1342 purifies pollutants in the sample detection apparatus in a case of receiving the combined logic intermediate control instruction. The ultraviolet device 343 performs disinfection of the sample detection apparatus in a case of receiving the combined logic intermediate control instruction. For ease of understanding, only one indicator light control board 1343 and one ultraviolet device 1344 are shown in the figure, a connection relationship between the fourth power supply control board 1341 and a control indicator light, the laminar flow purification device 1342, and the ultraviolet device 1344 is not shown, and a connection relationship between the indicator light control board 1343 and the control indicator light is not shown. It should be understood that, in a case that the intermediate control device 1200 is a function intermediate control device, the function intermediate control device includes the intermediate control board 1240 and other devices, and the other devices are set according to actual functional requirements, which are not limited herein.

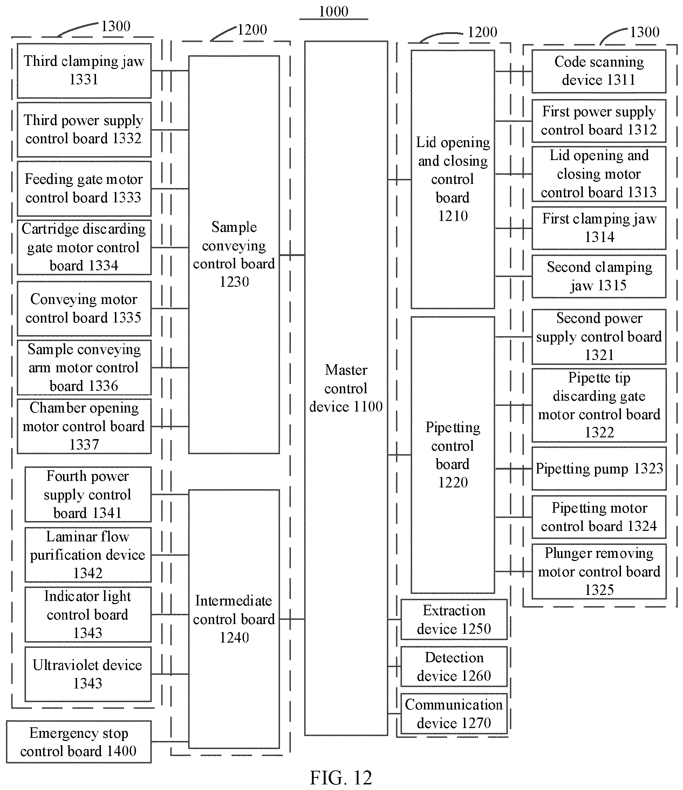

FIG. 12 is a schematic diagram of a second structure of a control apparatus for a sample detection apparatus according to the Embodiment 4 of the present application.

In an embodiment of the present application, a control apparatus 1000 further includes an emergency stop control board 1400, and the emergency stop control board 1400 is connected to a intermediate control board 1240.

The intermediate control board 1240 is configured to adjust a running state of a sample detection apparatus according to a state of the emergency stop control board 1400.

When an abnormality occurs in a sample detection process, a user may control the sample detection apparatus to stop running through the emergency stop control board 1400. For ease of understanding, the emergency stop control board 1400 in the embodiment of the present application is an emergency stop button, and the intermediate control board 1240 adjusts a running state of the sample detection apparatus according to the state of the emergency stop control board 1400. The running state of the sample detection apparatus includes a working state and a stop working state. When the running state of the sample detection apparatus is a working state and a state of the emergency stop control board 1400 is not in a pressed state, the sample detection apparatus is kept in a running state. When the running state of the sample detection apparatus is the working state, and the state of the emergency stop control board 1400 is a pressed state, the intermediate control board 1240 switches the sample detection apparatus from the working state to the stop working state.

In an embodiment of the present application, an intermediate control device 1200 further includes an extraction device 1250, and the extraction device 1250 is connected to a master control device 1100.

The extraction device 1250 is configured to extract a nucleic acid solution in response to a received master control instruction.

When the intermediate control device 1200 is configured to perform an action of a detection process, the intermediate control device 1200 may be equivalent to a device including a driving device 1300, that is, the intermediate control device 1200 may not be connected to the driving device 1300. The intermediate control device 1200 further includes the extraction device 1250, and the extraction device 1250 is connected to the master control device 1100 and not connected to the driving device 1300. When performing an extraction sub-process of the detection process, the master control device 1100 sends a master control instruction to each intermediate control device 1200, the extraction device 1250 responds to the master control instruction, and the intermediate control device 1200 other than the extraction device 1250 does not respond to the master control instruction. Specifically, the extraction device 1250 performs a magnetic rod sleeve taking and removing action, a cell lysis action, a nucleic acid adsorption and transferring action, and a nucleic acid washing and purifying action in response to the master control instruction, so as to control the sample detection apparatus to perform the sample detection process. It should be understood that a type of the extraction device 1250 is set according to actual requirements, which is not limited herein. For ease of understanding, in the embodiment of the present application, the extraction device 1250 is a semi-automatic extractor. It should be understood that, in a case that the intermediate control device 1200 is an extraction intermediate control device, the extraction intermediate control device includes an intermediate control board 1240 and other devices, and the other devices are set according to an actual extraction sub-process, which are not limited herein.

In an embodiment of the present application, an intermediate control device 1200 further includes a plurality of detection devices 1260, and each detection device 1260 is connected to a master control device 1100.

The detection device 1260 is configured to obtain a sample detection data in response to a received master control instruction, and send the sample detection data to the master control device 1100.

The master control device 1100 is further configured to generate a sample detection result according to the sample detection data.

The intermediate control device 1200 further includes the detection device 1260, and the detection device 1260 is connected to the master control device 1100 and not connected to a driving device 1300. When performing an extraction sub-process of a detection process, the master control device 1100 sends a master control instruction to each intermediate control device 1200, the detection device 1260 responds to the master control instruction, and the intermediate control device 1200 other than the detection device 1260 does not respond to the master control instruction. The detection device 1260 performs nucleic acid amplification to obtain the sample detection data, and sends the sample detection data to the master control device 1100. The master control device 1100 generates the sample detection result according to the sample detection data. It should be understood that the number of the detection devices 1260 is set according to actual requirements, which is not limited herein. A type of the detection device 1260 is also set according to actual requirements, which is not limited herein. For ease of understanding, in the embodiment of the present application, the detection device 1260 is a PCR detection device, and only one detection device 1260 is shown in the figure. In the embodiment of the present application, the detection device 1260 directly responds to the received master control instruction to perform an action for obtaining the sample detection data, and the detection device 1260 is not connected to the driving device 1300. It should be understood that, in a case that the intermediate control device 1200 is a detection intermediate control device, the detection intermediate control device includes an intermediate control board 1240 and other devices, and the other devices are set according to an actual detection sub-process, which are not limited herein.

In an embodiment of the present application, an intermediate control device 1200 further includes a communication device 1270, and the communication device 1270 is connected to a master control device 1100.

The communication device 1270 is configured to upload running state data of a sample detection apparatus.

The communication device 1270 is configured to communicate with an external device, and upload the running state data of the sample detection apparatus. It should be understood that the communication device 1270 may be configured to receive a remote control instruction of the external device, and send the remote control instruction to the master control device 1100 to remotely control the sample detection apparatus. The communication device 1270 may be further configured to upload a sample detection result to the external device. A type of the communication device 1270 is set according to actual requirements, which is not limited herein. For ease of understanding, the communication device 1270 in the embodiment of the present application is an Artificial Intelligence & Internet of Things (AIOT) device. In the embodiment of the present application, the communication device 1270 directly performs an action of uploading the running status data of the sample detection apparatus, and the communication device 1270 is not connected to a driving device 1300.

The present application provides a control apparatus for a sample detection apparatus, a master control device controls an intermediate control device and the intermediate control device controls a driving device, which simplifies a master control instruction and a structure of the master control device, reduces a probability of abnormality occurring in the sample detection apparatus, and ensures that the sample detection apparatus obtains a valid sample detection result. Meanwhile, when an abnormality occurs in the sample detection apparatus, only an abnormal device needs to be replaced, without a need to replace the master control device, the intermediate control device and the driving device altogether.

The embodiments of the present application further provide a sample detection apparatus, which includes a control apparatus 1000 applied to a sample detection apparatus in the embodiment.

The sample detection apparatus further includes an execution device, and a type of the execution device is set according to requirements, which may be a device such as a robotic arm, a pipette tip discarding device, a plunger removing device, a feeding device, a conveying device, a chamber opening device, and details are not described herein again. As shown in the figure, in a case that the driving device 1300 is not connected to the execution device, the driving device 1300 responds to an instruction and directly performs an action of a detection process. In a case that the driving device 1300 is connected to the execution device, the driving device 1300 drives the execution device to perform the action of the detection process. Whether the driving device 1300 is connected to the execution device is set according to an actual requirement of the driving device 1300, and details are not described herein again.

The embodiments of the present application further provide a computer apparatus, the computer apparatus includes a memory and a processor, the memory stores a computer program, and when the computer program is executed by the processor, the control method for the sample detection apparatus as described in Example 1 is implemented.

The embodiments of the present application further provide a computer-readable storage medium, the computer-readable storage medium stores a computer program, and when the computer program is executed by a processor, the control method for the sample detection apparatus as described in Example 1 is implemented.

A person skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product implemented on one or more computer-usable storage media (including but not limited to a disk memory, a CD-ROM, an optical memory, or the like) including computer-usable program codes.

The present application is described with reference to the flowcharts and/or block diagrams of the method, the apparatus (system), and the computer program product according to the embodiments of the present application. It should be understood that computer program instructions may be used to implement each process and/or block in the flowcharts and/or the block diagrams and a combination of a process and/or a block in the flowcharts and/or the block diagrams. These computer program instructions may be provided to a processor of a general purpose computer, special purpose computer, embedded processor, or other programmable data processing apparatus to produce a machine, such that the instructions executed by the processor of the computer or other programmable data processing apparatus generate a device for implementing a function specified in one or more processes in the flowchart and/or in one or more blocks of the block diagram.

These computer program instructions may also be stored in a computer-readable memory that can direct a computer or other programmable data processing apparatus to work in a particular manner, such that the instructions stored in the computer-readable memory produce an article of manufacture including an instruction device that implements a function specified in one or more processes in the flowchart and/or in one or more blocks in the block diagram.

These computer program instructions may also be loaded onto a computer or other programmable data processing apparatus, such that a series of operational steps are performed on the computer or other programmable apparatus to produce a computer-implemented process, so that the instructions executed on the computer or other programmable apparatus provide steps for implementing a function specified in one or more processes in the flowchart and/or in one or more blocks in the block diagram.

In a typical configuration, the computing apparatus includes one or more processors (CPUs), an input/output interface, a network interface, and a memory.

The memory may include forms such as a non-persistent memory, a random access memory (RAM), and/or a non-volatile memory in a computer-readable medium, for example, a read-only memory (ROM) or a flash RAM. The memory is an example of a computer-readable medium.

The computer-readable storage medium includes persistent, non-persistent, movable, and non-removable media that can store information by using any method or technology. The information may be a computer-readable instruction, a data structure, a program module, or other data. Examples of computer storage media include, but are not limited to, phase change RAM (PRAM), static random access memory (SRAM), dynamic random access memory (DRAM), other types of random access memory (RAM), read only memory (ROM), electrically erasable programmable read only memory (EEPROM), flash memory or other memory technology, read only compact disc read only memory (CD-ROM), digital versatile disk (DVD) or other optical storage, magnetic cassette tape, magnetic tape magnetic disk storage or other magnetic storage devices, or any other non-transmission medium, which can be used to store information that can be accessed by a computing apparatus. As defined herein, the computer-readable medium does not include transitory media such as modulated data signals and carriers.

It should be noted that the terms "include", "have", or any other variant thereof are intended to cover a non-exclusive inclusion, so that a process, method, commodity, or device that includes a series of elements includes not only those elements, but also other elements that are not explicitly listed, or elements inherent to the process, method, commodity, or device. In the absence of more restrictions, the element limited by the statement "includes one..." do not rule out that there are other same elements in the process, method, commodity or device including the element.

The foregoing descriptions are merely embodiments of the present application, and are not intended to limit the present application. For a person skilled in the art, the present application may have various modifications and changes. Any modification, equivalent replacement, or improvement made without departing from the spirit and principle of the present application shall fall within the scope of the claims of the present application.

## Claims

1. A control method for a sample detection apparatus, wherein the sample detection apparatus comprises a master control device, a plurality of intermediate control devices and a plurality of driving devices, and the method comprises:
generating, by the master control device, a master control instruction based on a sample detection process, and sending the master control instruction to each intermediate control device, wherein the master control instruction is configured to control a target intermediate control device to perform the detection process, and the target intermediate control device is an intermediate control device capable of parsing the master control instruction;
parsing, by the target intermediate control device, the master control instruction to generate a combined logic intermediate control instruction and sending the combined logic intermediate control instruction to a target driving device, wherein the target driving device is a driving device connected to the target intermediate control device; and
performing, by the target driving device, an action of the detection process in response to the combined logic intermediate control instruction.

2. The control method for the sample detection apparatus according to claim 1, wherein the method further comprises:
acquiring, by the master control device, an instruction completion signal generated by the intermediate control device, and determining, based on the instruction completion signal, whether a sample detection is completed; and
in a case that the sample detection is not completed, performing a step of generating, by the master control device, the master control instruction based on the sample detection process, and sending the master control instruction to the each intermediate control device.

3. The control method for the sample detection apparatus according to claim 1, wherein the method further comprises:
in a case that the target driving device completes the action, generating, by the target driving device, an action completion signal, and sending the action signal to the target intermediate control device;
detecting, by the target intermediate control device, whether the master control instruction is completed according to the action completion signal; and
in a case that the master control instruction is not completed, sending, by the target intermediate control device, the combined logic intermediate control instruction to a next target driving device.

4. The control method for the sample detection apparatus according to claim 1, wherein the intermediate control device comprises a lid opening and closing intermediate control device, and the parsing, by the target intermediate control device, the master control instruction to generate the combined logic intermediate control instruction and sending the combined logic intermediate control instruction to the target driving device, comprises:
in a case that the target intermediate control device is the lid opening and closing intermediate control device, parsing, by the lid opening and closing intermediate control device, the master control instruction to generate a first combined logic intermediate control instruction, and sequentially sending the first combined logic intermediate control instruction to each target driving device, wherein the first combined logic intermediate control instruction is configured to control the target driving device to perform a combined action for opening and closing a lid.

5. The control method for the sample detection apparatus according to claim 1, wherein the intermediate control device comprises a pipetting intermediate control device, and the parsing, by the target intermediate control device, the master control instruction to generate the combined logic intermediate control instruction and sending the combined logic intermediate control instruction to the target driving device, comprises:
in a case that the target intermediate control device is the pipetting intermediate control device, parsing, by the pipetting intermediate control device, the master control instruction to generate a second combined logic intermediate control instruction, and sequentially sending the second combined logic intermediate control instruction to each target driving device, wherein the second combined logic intermediate control instruction is configured to control the target driving device to perform a combined action for aspirating and mixing a reagent.

6. The control method for the sample detection apparatus according to claim 1, wherein the intermediate control device comprises an extraction intermediate control device, and the parsing, by the target intermediate control device, the master control instruction to generate the combined logic intermediate control instruction and sending the combined logic intermediate control instruction to the target driving device, comprises:
in a case that the target intermediate control device is the extraction intermediate control device, parsing, by the extraction intermediate control device, the master control instruction to generate a third combined logic intermediate control instruction, and sequentially sending the third combined logic intermediate control instruction to each target driving device, wherein the third combined logic intermediate control instruction is configured to control the target driving device to perform a combined action for extracting nucleic acid.

7. The control method for the sample detection apparatus according to claim 1, wherein the intermediate control device comprises a sample conveying intermediate control device, and the parsing, by the target intermediate control device, the master control instruction to generate the combined logic intermediate control instruction and sending the combined logic intermediate control instruction to the target driving device, comprises:
in a case that the target intermediate control device is the sample conveying intermediate control device, parsing, by the sample conveying intermediate control device, the master control instruction to generate a fourth combined logic intermediate control instruction, and sequentially sending the fourth combined logic intermediate control instruction to each target driving device, wherein the fourth combined logic intermediate control instruction is configured to control the target driving device to perform a combined action for conveying a sample.

8. The control method for the sample detection apparatus according to claim 1, wherein the intermediate control device comprises a function intermediate control device, and the parsing, by the target intermediate control device, the master control instruction to generate the combined logic intermediate control instruction and sending the combined logic intermediate control instruction to the target driving device, comprises:
in a case that the target intermediate control device is the function intermediate control device, parsing, by the function intermediate control device, the master control instruction to generate a fifth combined logic intermediate control instruction, and sequentially sending the fifth combined logic intermediate control instruction to each target driving device, wherein the fifth combined logic intermediate control instruction is configured to control the target driving device to perform a combined action for adjusting a detection environment.

9. The control method for the sample detection apparatus according to claim 1, wherein the intermediate control device comprises a detection intermediate control device, and the parsing, by the target intermediate control device, the master control instruction to generate the combined logic intermediate control instruction and sending the combined logic intermediate control instruction to the target driving device, comprises:
in a case that the target intermediate control device is the detection intermediate control device, parsing, by the detection intermediate control device, the master control instruction to generate a sixth combined logic intermediate control instruction, and sequentially sending the sixth combined logic intermediate control instruction to each target driving device, wherein the sixth combined logic intermediate control instruction is configured to control the target driving device to perform a combined action for obtaining sample detection data.

10. The control method for the sample detection apparatus according to claim 9, the method further comprises:
obtaining, by the master control device, the sample detection data obtained by the detection intermediate control device, and generating a sample detection result based on the sample detection data.

11. The control method for the sample detection apparatus according to claim 1, wherein the intermediate control device comprises a lid opening and closing intermediate control device, a pipetting intermediate control device and an extraction intermediate control device, and the parsing, by the target intermediate control device, the master control instruction to generate the combined logic intermediate control instruction and sending the combined logic intermediate control instruction to the target driving device, comprises:
in a case that the target intermediate control device is the lid opening and closing intermediate control device, parsing, by the lid opening and closing intermediate control device, the master control instruction to generate a first combined logic intermediate control instruction, and sequentially sending the first combined logic intermediate control instruction to each target driving device, wherein the first combined logic intermediate control instruction is configured to control the target driving device to perform a combined action for opening and closing a lid;
in a case that the target intermediate control device is the pipetting intermediate control device, parsing, by the pipetting intermediate control device, the master control instruction to generate a second combined logic intermediate control instruction, and sequentially sending the second combined logic intermediate control instruction to each target driving device, wherein the second combined logic intermediate control instruction is configured to control the target driving device to perform a combined action for aspirating and mixing a reagent; and
in a case that the target intermediate control device is the extraction intermediate control device, parsing, by the extraction intermediate control device, the master control instruction to generate a third combined logic intermediate control instruction, and sequentially sending the third combined logic intermediate control instruction to each target driving device, wherein the third combined logic intermediate control instruction is configured to control the target driving device to perform a combined action for extracting nucleic acid.

12. The control method for the sample detection apparatus according to claim 1, wherein the intermediate control device comprises a sample conveying intermediate control device and a detection intermediate control device, and the parsing, by the target intermediate control device, the master control instruction to generate the combined logic intermediate control instruction and sending the combined logic intermediate control instruction to the target driving device, comprises:
in a case that the target intermediate control device is the sample conveying intermediate control device, parsing, by the sample conveying intermediate control device, the master control instruction to generate a fourth combined logic intermediate control instruction, and sequentially sending the fourth combined logic intermediate control instruction to each target driving device, wherein the fourth combined logic intermediate control instruction is configured to control the target driving device to perform a combined action for conveying a sample; and
in a case that the target intermediate control device is the detection intermediate control device, parsing, by the detection intermediate control device, the master control instruction to generate a sixth combined logic intermediate control instruction, and sequentially sending the sixth combined logic intermediate control instruction to each target driving device, wherein the sixth combined logic intermediate control instruction is configured to control the target driving device to perform a combined action for obtaining sample detection data.

13. The control method for the sample detection apparatus according to claim 1, wherein the intermediate control device comprises a lid opening and closing intermediate control device, a pipetting intermediate control device, an extraction intermediate control device, a sample conveying intermediate control device, and a detection intermediate control device, and the parsing, by the target intermediate control device, the master control instruction to generate the combined logic intermediate control instruction and sending the combined logic intermediate control instruction to the target driving device, comprises:
in a case that the target intermediate control device is the lid opening and closing intermediate control device, parsing, by the lid opening and closing intermediate control device, the master control instruction to generate a first combined logic intermediate control instruction, and sequentially sending the first combined logic intermediate control instruction to each target driving device, wherein the first combined logic intermediate control instruction is configured to control the target driving device to perform a combined action for opening and closing a lid;
in a case that the target intermediate control device is the pipetting intermediate control device, parsing, by the pipetting intermediate control device, the master control instruction to generate a second combined logic intermediate control instruction, and sequentially sending the second combined logic intermediate control instruction to each target driving device, wherein the second combined logic intermediate control instruction is configured to control the target driving device to perform a combined action for aspirating and mixing a reagent;
in a case that the target intermediate control device is the extraction intermediate control device, parsing, by the extraction intermediate control device, the master control instruction to generate a third combined logic intermediate control instruction, and sequentially sending the third combined logic intermediate control instruction to each target driving device, wherein the third combined logic intermediate control instruction is configured to control the target driving device to perform a combined action for extracting nucleic acid;
in a case that the target intermediate control device is the sample conveying intermediate control device, parsing, by the sample conveying intermediate control device, the master control instruction to generate a fourth combined logic intermediate control instruction, and sequentially sending the fourth combined logic intermediate control instruction to each target driving device, wherein the fourth combined logic intermediate control instruction is configured to control the target driving device to perform a combined action for conveying a sample; and
in a case that the target intermediate control device is the detection intermediate control device, parsing, by the detection intermediate control device, the master control instruction to generate a sixth combined logic intermediate control instruction, and sequentially sending the sixth combined logic intermediate control instruction to each target driving device, wherein the sixth combined logic intermediate control instruction is configured to control the target driving device to perform a combined action for obtaining sample detection data.

14. A sample detection apparatus, wherein the sample detection apparatus comprises a master control device, a plurality of intermediate control devices and a plurality of driving devices,
wherein the master control device is configured to generate a master control instruction based on a sample detection process, and send the master control instruction to each intermediate control device, wherein the master control instruction is configured to control a target intermediate control device to perform the detection process, and the target intermediate control device is an intermediate control device capable of parsing the master control instruction;
the target intermediate control device is configured to parse the master control instruction to generate a combined logic intermediate control instruction, and send the combined logic intermediate control instruction to a target driving device, wherein the target driving device is a driving device connected to the target intermediate control device; and
the target driving device is configured to perform an action of the detection process in response to the combined logic intermediate control instruction.

15. A computer-readable storage medium, wherein a computer program is stored on the computer-readable storage medium, and when the computer program is executed by a processor, the control method for the sample detection apparatus according to any one of claims 1 to 11, claim 11 and claim 12 is implemented.
